# FASCICULE DE BREVET EUROPEEN

(11) **EP 0 447 300 B1**
(45) Date de publication et mention de la délivrance du brevet: **27.07.1994**
(21) Numéro de dépôt: 91400624.2
(22) Date de dépôt: 07.03.1991
(51) Int. Cl.: C03B 5/235

(54) **Procédé de fusion et d'affinage d'une charge**
Verfahren zum Schmelzen und Raffinieren eines Gemenges
Method for melting and refining a batch

(30) Priorité: 16.03.1990 FR 9003373
(43) Date de publication de la demande: 18.09.1991
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Jouvaud, Dominique, F-75015 Paris (FR); Pascarel, Louis, F-91190 Gif-sur-Yvette (FR); Genies, Bernard, F-91440 Bures-sur-Yvette (FR)
(74) Mandataire: Le Moenner, Gabriel

(56) Documents cités:
- EP-A- 0 115 863
- DE-A- 2 015 597
- FR-A- 2 215 399
- US-A- 2 616 221
- US-A- 3 129 930

## Description

La présente invention concerne un procédé de fusion et d'affinage d'une charge introduite en continu à l'état brut en tête d'un four et extraite à l'état affiné en fond de four, avec transfert thermique vers ladite charge au moins en partie substantielle par des brûleurs de paroi à flammes dirigées vers ladite charge, selon lequel au moins une partie des dites flammes résultent de la combustion d'un mélange combustible - oxygène industriel.

Dans la technique habituellement mise en oeuvre dans ce genre de procédé, les fours fonctionnant en continu, les flammes sont émises également en continu, avec réglage de puissance transférée à la charge, qui peut être fait automatiquement par des sondes thermiques couplées à un régulateur d'optimisation de la puissance.

Les flammes de brûleurs aéro-combustibles chauffent essentiellement par convection et rayonnement, mais on sait que les flammes oxy-combustibles rayonnent beaucoup plus qu'elles ne convectent. En plus de ces deux effets complémentaires, il convient de noter l'effet mécanique dû à l'impulsion de la flamme sur la surface de la charge. En fonction de l'impulsion et de l'inclinaison du brûleur, il est possible d'obtenir des effets de surface plus ou moins importants sur des amas, mottes ou mousses flottant en surface. Par ailleurs, les flammes aéro-combustibles comme les flammes oxy-combustibles produisent une certaine quantité de gaz polluants qui est fonction des concentrations en azote, oxygène et autres impuretés, et de la température, ainsi que des phénomènes aérodynamiques difficilement qualifiables mais dont les effets sont connus.

Si l'on considère le cas particulier de l'élaboration du verre, on peut noter l'existence d'un ou plusieurs brûleurs qui maintiennent en température l'enveloppe du four et assurent la fusion de la matière enfournée avec une zone de fusion occupant les 3/4 de la longueur du four et une zone d'affinage si tuée en fond de four contenant généralement du verre liquide homogène. Dans la zone de fusion, la matière est chargée en tête de four et flotte sur un bain de verre liquide. Au fur et à mesure de son avancement dans le four, la masse compacte se désagrège, fond et se disloque pour former des îlots, ou mottes, qui vont dériver lentement vers la zone d'affinage. On admet généralement que la qualité du verre est très souvent dépendante d'une zone d'affinage propre et très homogène. Le bon fonctionnement de l'ensemble constitue cependant un difficile équilibre entre une puissance appropriée de flammes, une température de voûte maximale et une zone d'affinage dégagée. Toute anomalie rompt l'équilibre et se traduit par un envahissement de mottes dans la zone d'affinage, qui va dégrader la qualité du verre. A qualité fixe et pour une température de voûte proche du seuil critique correspond une production maximale qu'on ne peut dépasser dans les conditions actuelles sous peine d'engorger la zone d'affinage.

La présente invention a pour objets d'améliorer la productivité du procédé précité en :
- maintenant les mottes en dehors de la zone d'affinage ;
- augmentant le rendement thermique du procédé ;
- en évitant de dépasser le seuil critique de température admissible pour la voûte,

et cela de façon à être maître des choix suivants :
. soit une augmentation de production à qualité identique,
. soit une amélioration de la qualité à production constante,
. soit une diminution de la puissance à production et qualité identiques,

et ces objectifs de l'invention sont atteints en ce que l'on assure, pour une ou plusieurs des dites flammes essentiellement actives dans la zone d'affinage, une combustion pulsée avec des variations cycliques de l'alimentation en oxygène et de l'alimentation en combustible, comportant des phases d'activité maximale avec flamme de forte capacité thermique, entrecoupées de phases de repos avec flamme à capacité thermique substantiellement réduite voire totalement annihilée.

Grâce à la combustion pulsée, l'affinage de la charge peut être effectuée dans des conditions optimales. En effet :
- d'une part le transfert convectif augmente lorsqu'on met en oeuvre, dans le temps, des modifications spatiales pour ce qui concerne les écoulements. L'utilisation de pulsations modifie considérablement les contraintes pariétales et donc augmente la convection à la surface de la charge. Simultanément, l'impulsion des fluides arrivant sur la matière à chauffer étant irrégulière, les mouvements engendrés par les pulsations permettent une fusion plus rapide des matières (amas présents en surface) par allongement du temps de contact avec la flamme. En présence de mousses qui sont repoussées, les pulsations ont donc la propriété d'augmenter la surface "propre" et d'améliorer la quantité d'énergie entrant par rayonnement dans la charge. De la sorte, on obtient une augmentation des transferts convectifs radiatifs, ceux-ci conduisant à une diminution des viscosités des matières en cours de fusion, et induisant une augmentation des mouvements de surface ;
- d'autre part, la combustion pulsée engendre également des variations de concentrations des combustibles, comburants et produits de combustion. Ces modifications de concentrations ont une incidence directe sur la formation de polluants tels les oxydes d'azote, et par des modifications et décalages de fréquence, on parvient à diminuer la formation de ces oxydes d'azote ;
- de plus, ayant réglé l'effet mécanique des flammes pulsées, on se sert d'un réglage temporel de la puissance pour doser l'énergie à transmettre à la charge et ceci est obtenu par un fonctionnement alternatif des brûleurs, associé à des temps d'arrêt à l'inversion, qui vont permettre de doser très finement l'énergie dissipée avec, comme avantage, un rendement thermique amélioré, d'où, à production constante, une diminution d'énergie fossile introduite.

Selon une forme de mise en oeuvre, on procède, avec une pluralité de flammes voisines, le cas échéant à croisement superposé, à une pulsation d'une flamme comprenant une phase de repos à capacité thermique substantiellement réduite voire totalement annihilée de durée plus longue qu'une phase active d'emission de flamme à forte capacité thermique, de telle sorte qu'une phase active d'une flamme quelconque de ladite pluralité de flammes soit suivie d'une phase de repos de la totalité de ladite pluralité de flammes. De la sorte, dans certains fours, par exemple dans les fours à boucle, il est intéressant de provoquer la rencontre de deux flammes, l'une aéro-combustible transportant un ballast d'azote important, l'autre oxy-combustible ayant des températures nettement plus hautes. Le domaine de rencontre de ces deux flammes permet, par la dillution, que la flamme aéro-combustible engendre, de ne pas atteindre des températures de voûte trop grandes tout en apportant une énergie substantielle à la charge. Il est alors avantageux de positionner une flamme aéro-combustible voisine, ou à croisement superposé, d'une flamme oxy-combustible à niveau plus haut que ladite flamme oxy-combustible qui est plus chaude.

Selon une forme préférentielle de mise en oeuvre, les flammes soumises à une combustion pulsée sont du type à pré-combustion à l'intérieur du brûleur, et avantageusement, on utilise un brûleur du type décrit dans la demande de brevet FR-A-2 644 558 au nom de la demanderesse. En effet, comme l'objectif recherché est la création d'impulsions maximales associées à une excellente efficacité thermique, on a retenu une géométrie de brûleur permettant de dépasser les limites physiques liées à la température (vitesses soniques des fluides en particulier), et à cet effet pour associer un effet mécanique géré par l'impulsion et la puissance avec un effet thermique géré par mélange comburant-combustible exempt de produit de combustion, on a conçu et utilisé un type de brûleur de façon qu'une pré-combustion soit amorcée à l'intérieur d'une chambre de brûleur, afin d'obtenir à la fois un préchauffage des comburant et combustible pour relever la vitesse sonique et assurer un blocage des vitesses radiales, entraînant de ce fait une augmentation des vitesses longitudinales. Cette configuration a, en outre, l'avantage d'amorcer la combustion hors de toute pollution, ce qui garantit une vitesse de déflagration et une température de flammes maximales.

Selon une autre forme préférentielle de mise en oeuvre, les flammes soumises à une combustion pulsée sont inclinées angulairement vers la surface de la charge fondue en cours d'affinage et sont également inclinées angulairement vers l'amont par rapport au sens de déplacement de la charge en cours de fusion et affinage. De même le brûleur peut être plus ou moins avancé selon son axe longitudinal. De la sorte, on assure à la fois :
- un dégagement de la surface du bain ;
- un blocage des infondus dans la zone de fusion ;
- un transfert thermique maximum vers la charge avec réflection minimale vers la voûte ;
- et une opération des brûleurs dans des conditions acceptables afin notamment de ne pas détériorer l'ormeau.

L'invention est maintenant illustrée, à titre d'exemple, en référence au dessin annexé qui représente schématiquement un four d'élaboration de verre du type à boucle.

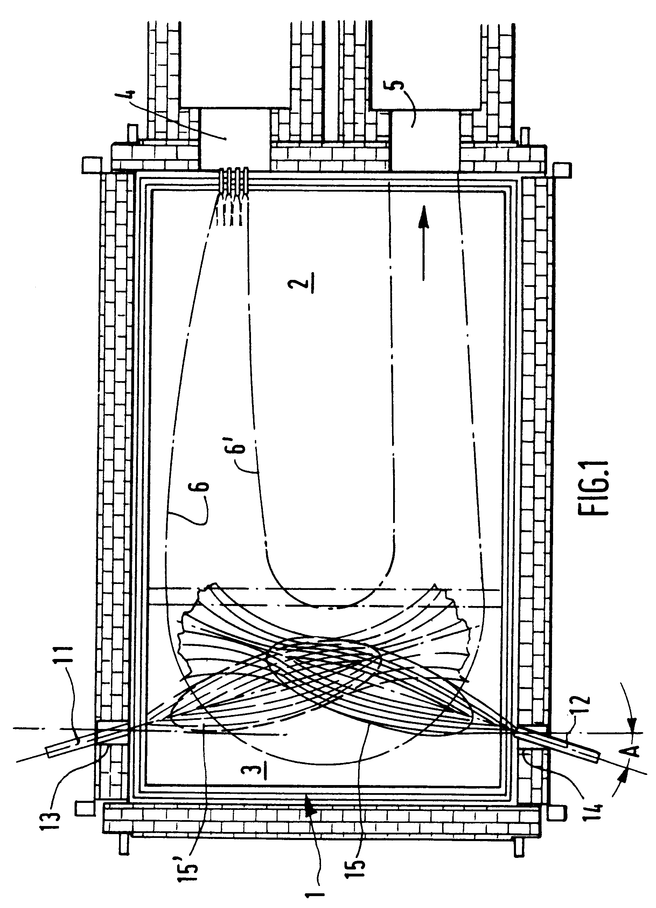

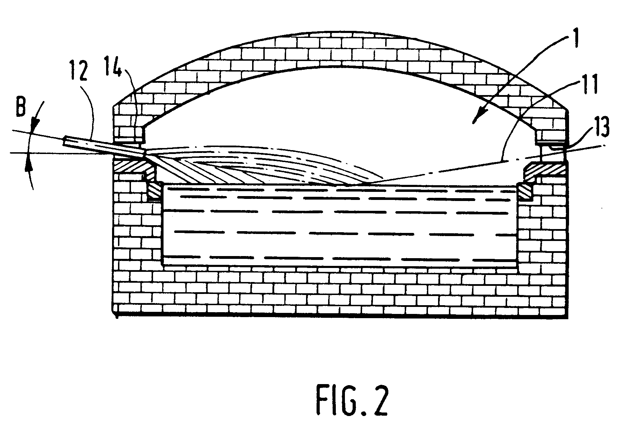

En se référant aux figures 1 et 2, un four d'élaboration du verre, de forme rectangulaire 1, comporte une trappe d'enfournement de charge située au-dessus du côté de la zone amont 2 et une ouverture de fond d'extraction du verre affiné côté aval 3. De larges ouvreaux 4 et 5 sont prévus côté amont 2 avec mise en position de brûleurs aéro-combustibles non représentés provoquant des flammes de chauffe avec admission d'air de combustion au travers des ouvreaux 4 et 5, et cela de façon alternative d'abord dans l'ouvreau 4 seulement (circulation des fumées selon le contour 6-6′ vers l'ouvreau 5 servant d'évacuateur et récupérateur thermique) puis dans l'ouvreau 5 seulement (circulation des fumées selon ce même contour 6-6′ vers l'ouvreau 4 servant alors d'évacuateur-récupératuer thermique). Dans la zone aval 3, on dispose de deux brûleurs oxyène-combustible 11 et 12 au travers de deux orifices de parois 13 et 14, chaque brûleur étant incliné d'un angle A vers l'amont et d'un angle B vers la surface du bain.

Il se crée ainsi dans le four une large zone de fusion 16 à l'amont séparée d'une zone d'affinage à l'aval 17 par une étroite zone dite de bouillonnement 18.

Les deux brûleurs 11 et 12 fonctionnent en combustion pulsée alternative, de façon qu'une seule flamme 15 soit créée, alternativement provenant du brûleur 11 puis en 15′ du brûleur 12, avec une phase de repos dès l'extinction d'une flamme quelconque 15-15′. Par exemple le brûleur 11 émet une flamme pendant une phase de 20 à 40 sec., puis se produit une phase d'arrêt ou de repos de 10 à 20 sec., ensuite le brûleur 12 émet une flamme pendant une phase de 20 à 40 sec. et ainsi de suite.

Dans la disposition décrite on a atteint les avantages suivants :
- une augmentation de la surface d'impact avec meilleur transfert radiatif (action thermique) ;
- un accroîssement du temps de séjour des infondus flottant en surface par diminution de leur vitesse de transit (action mécanique de la flamme) ;
- une diminution notable des puissances thermiques dissipées par rapport à la technique des brûleurs à puissance émise de façon continue tout en obtenant des effets thermiques et mécaniques identiques.

Il est à noter que ces améliorations sont obtenues sans dépasser les valeurs thermiques critiques de fonctionnement du procédé (température de voûte en particulier).

En outre, on a prouvé que les quantités d'oxyde d'azote formées par effet thermique étaient fortement réduites en réglant les fréquences et déphasage des fluides, toutes autres conditions restant identiques (puissance, pertes thermiques et air induit).

### EXEMPLE DE REALISATION INDUSTRIELLE DE L'INVENTION :

L'application industrielle est réalisée sur un four de verre à boucle de 220 t/j de tirée.
- type de four: : A boucle avec fréquence d'inversion des brûleurs aéro-gaz toutes les 20 minutes
- puissance aéro-fuel: : 10.1 MW
- puissance électrique: : 1027 KWh (résistances immergées)
- surface: : 60 m²
- type de verre: : blanc
- capacité nominale: : 220 t/j

Dans ce four classique ont été implantés, au niveau de la zone d'affinage, deux brûleurs orientés vers la zone de fusion, comme représentés au dessin :
Caractéristiques des brûleurs oxy-combustibles :
. Chambre de précombustion ajustable ;
. Puissance réglée à la limite du décollement de flamme ;
. Vitesse sonique dans la chambre de précombustion proche de 400 m/s
. Fonctionnement des brûleurs en alternance avec période d'arrêt pour doser la puissance introduite.

L'invention s'applique à différents domaines tels que, notamment :
Four rotatif : ciment, fonte, céramique, zinc, déchets, etc... pour modifier localement les vitesse de fusion et les déplacements des matières en surface ;
Four de verre à boucle type "Unit melter" avec brûleurs transversaux pour modifier localement les vitesses de fusion et déplacements des matières en surface ;
Four à arc : l'intérêt de cette technique sur ce type de four est immédiat, puisque l'on souhaite dans cette application associer de fortes impulsions modulables avec des transferts thermiques contrôlés en vue de minorer le coût économique ;
Four à sole bain plat : possibilité d'utiliser cette technique sur four d'aluminium, fonte, aciers spéciaux, cuivre, etc... pour modifier localement les concentrations et profils thermiques ;
Four de déchets rotatif : on profite de la forte impulsion pour agir thermiquement à distance, en vue de modifier la courbe des températures axiales sans introduire trop d'énergie dans le four.
Traitement thermique d'homogénéisation d'une atmosphère ou de modification à distance des compositions.

## Revendications

1. Procédé de fusion et d'affinage d'une charge introduite en continu à l'état brut en tête d'un four (1) et extraite à l'état affiné en fond du four, avec transfert thermique vers ladite charge au moins en partie substantielle par des brûleurs (11,12) de parois à flammes dirigées vers ladite charge, selon lequel au moins une partie des dites flammes résultent de la combustion d'un mélange combustible-oxygène industriel, caractérisé en ce que l'on assure, pour une ou plusieurs des dites flammes (15,15′) essentiellement actives dans la zone d'affinage (3), une combustion pulsée avec des variations cycliques de l'alimentation en oxygène et de l'alimentation en combustible, comportant des phases d'activité maximale à flammes de forte capacité thermique entrecoupées de phases de repos à capacité thermique substantiellement réduite voire totalement annihilée.

2. Procédé de fusion et d'affinage d'une charge selon la revendication 1, caractérisé en ce que la période d'une pulsation d'une flamme (15,15′) est de l'ordre de la minute, comprenant une phase active d'émission de flamme à forte capacité thermique de durée plus longue qu'une phase de repos à capacité substantiellement réduite voire totalement annihilée.

3. Procédé de fusion et d'affinage d'une charge selon la revendication 1, caractérisé en ce qu'on procède pour une pluralité de flammes voisines (15,15′), le cas échéant à croisement superposé, à une pulsation d'une flamme comprenant une phase de repos à capacité thermique substantiellement réduite voire totalement annihilée de durée plus longue qu'une phase active d'émission de flamme à forte capacité thermique, de telle sorte qu'une phase active d'une quelconque des dites flammes soit suivie d'une phase de repos de la totalité de ladite pluralité de flammes.

4. Procédé de fusion et d'affinage d'une charge selon la revendication 3, caractérisé en ce qu'au moins une flamme (15) de ladite pluralité de flammes (15,15′) est une flamme aéro-combustible et au moins une autre flamme (15′) de ladite pluralité de flammes est une flamme oxygène combustible.

5. Procédé de fusion et d'affinage d'une charge selon la revendication 4, caractérisé en ce qu'une flamme aéro-combustible (15′) voisine à croisement superposé d'une flamme oxy-combustible (15) est située à niveau plus haut que ladite flamme oxy-combustible qui est plus chaude.

6. Procédé de fusion et d'affinage d'une charge selon l'une quelconque des revendications 1 à 4, caractérisé en ce que les flammes (15,15′) soumises à une combustion pulsée sont inclinées angulairement (B) vers la surface de la charge fondue en cours d'affinage.

7. Procédé de fusion et d'affinage d'une charge selon l'une quelconque des revendications 1 à 6, caractérisé en ce que les flammes (15,15′) soumises à une combustion pulsée sont inclinées angulairement (A) vers l'amont par rapport au sens de déplacement de la charge en cours de fusion et affinage.

8. Procédé de fusion et d'affinage d'une charge selon l'une quelconque des revendications 1 à 6, caractérisé en ce que les flammes (15,15′) soumises à une combustion pulsée sont du type à pré-combustion à l'intérieur du brûleur (11,12).

9. Procédé de fusion et d'affinage d'une charge selon l'une des revendications 1 à 7, caractérisé en ce qu'une flamme (15,15′) soumise à une combustion pulsée peut être plus ou moins avancée dans le four (1) selon son axe.

## Patentansprüche

1. Verfahren zum Schmelzen und Raffinieren einer kontinuierlich im unbearbeiteten Zustand in den Kopf eines Ofens (1) eingeleiteten und im raffinierten Zustand vom Boden des Ofens entnommen Charge unter Übertragung von Wärme auf zumindest einen wesentlichen Teil der Charge mittels wandseitigen Brennern (11, 12) mit auf die Charge gerichteten Flammen, bei dem zumindest ein Teil der Flammen aus der Verbrennung eines Industriesauerstoff/-brennstoffgemisches herrühren, dadurch gekennzeichnet, daß für eine oder mehrere der im wesentlichen in der Raffinationszone (3) wirksamen Flammen (15, 15′) eine pulsierende Verbrennung mit zyklisch abwechselnder Sauerstoffund Brennstoffzuführung vorgesehen wird, die von Ruhephasen stark verminderter bis vollständig abgebauter Wärmeleistung unterbrochene Phasen maximaler Flammenaktivität hoher Wärmeleistung umfaßt.

2. Verfahren zum Schmelzen und Raffinieren einer Charge nach Anspruch 1, dadurch gekennzeichnet, daß die Pulsationsperiode einer Flamme (15, 15′) in der Größenordnung von einer Minute liegt und eine aktive Flammenemissionsphase hoher Wärmeleistung umfaßt, die länger dauert als eine Ruhephase stark verminderter bis vollständig abgebauter Wärmeleistung.

3. Verfahren zum Schmelzen und Raffinieren einer Charge nach Anspruch 1, dadurch gekennzeichnet, daß für eine Mehrzahl benachbarter, ggf. gekreuzt übereinander liegender Flammen (15, 15′) eine Pulsation einer Flamme durchgeführt wird, die eine länger als eine maximale Flammenaktivität hoher Wärmeleistung dauernde Ruhephase stark verminderter bis vollständig abgebauter Wärmeleistung umfaßt, bei der auf eine aktive Phase einer beliebigen der Flammen eine Ruhephase sämtlicher der Mehrzahl von Flammen folgt.

4. Verfahren zum Schmelzen und Raffinieren einer Charge nach Anspruch 3, dadurch gekennzeichnet, daß zumindest eine Flamme (15) der Mehrzahl von Flammen (15, 15′) eine unter Luft brennende und zumindest eine weitere Flamme (15′) der Mehrzahl von Flammen eine unter Sauerstoff brennende Flamme ist.

5. Verfahren zum Schmelzen und Raffinieren einer Charge nach Anspruch 4, dadurch gekennzeichnet, daß benachbart gekreuzt übereinanderliegend eine unter Sauerstoff brennende Flamme (15) und eine unter Luft brennende Flamme (15′) vorgesehen sind, die auf einem höheren Niveau als die unter Sauerstoff brennende, heißere Flamme angeordnet ist.

6. Verfahren zum Schmelzen und Raffinieren einer Charge nach einem der Ansprüche 1 bis 4, dadurch gekennzeichnet, daß die einer pulsierenden Verbrennung unterworfenen Flammen (15, 15′) zur Oberfläche der geschmolzenen Charge während des Raffiniervorgangs unter einem Winkel (B) geneigt sind.

7. Verfahren zum Schmelzen und Raffinieren einer Charge nach einem der Ansprüche 1 bis 6, dadurch gekennzeichnet, daß die einer pulsierenden Verbrennung unterworfenen Flammen (15, 15′) stromaufwärts in Bezug auf die Richtung, in die sich die Charge während des Schmelz- und Raffiniervorgangs bewegt, unter einem Winkel (A) geneigt sind.

8. Verfahren zum Schmelzen und Raffinieren einer Charge nach einem der Ansprüche 1 bis 6, dadurch gekennzeichnet, daß die einer pulsierenden Verbrennung unterworfenen Flammen (15, 15′) solche mit Vorverbrennung im Innern des Brenners (11, 12) sind.

9. Verfahren zum Schmelzen und Raffinieren einer Charge nach einem der Ansprüche 1 bis 7, dadurch gekennzeichnet, daß die einer pulsierenden Verbrennung unterworfene Flamme (15, 15′) mehr oder weniger stark längs der Achse des Ofens (1) vorgeschoben sein kann.

## Claims

1. Method of smelting and refining a charge introduced continuously in the crude state at the head of a furnace (1) and extracted in the refined state at the bottom of the furnace, with heat transfer towards the said charge at least in a substantial part by wall burners (11, 12) with flames pointing towards the said charge, according to which at least part of the said flames result from the combustion of an industrial fuel-oxygen mixture, characterized in that, for one or more of the said flames (15,15′) essentially active in the refining region (3), pulsed combustion is produced with cyclic variations of the oxygen supply and the fuel supply, including phases of maximum activity with flames having high thermal capacity dispersed with rest phases with substantially reduced or even completely cancelled thermal capacity.

2. Method of smelting and refining a charge according to Claim 1, characterized in that the period of a pulsation of a flame (15,15′) is of the order of one minute, comprising an active phase of emission of a flame having high thermal capacity, of longer duration than a rest phase with substantially reduced or even completely cancelled capacity.

3. Method of smelting and refining a charge according to Claim 1, characterized in that, for a plurality of neighbouring flames (15,15′), optionally with superimposed crossover, pulsation of a flame is carried out comprising a rest phase with substantially reduced or even completely cancelled thermal capacity, of longer duration than an active phase of emission of a flame with high thermal capacity, such that an active phase of any one of the said flames is followed by a rest phase of all of the said plurality of flames.

4. Method of smelting and refining a charge according to Claim 3, characterized in that at least one flame (15) of the said plurality of flames (15,15′) is an air-fuel flame and at least one other flame (15′) of the said plurality of flames is an oxygen-fuel flame.

5. Method of smelting and refining a charge according to Claim 4, characterized in that a neighbouring air-fuel flame (15′) with crossover superimposed with oxygen-fuel flame (15) is situated at a higher level than the said oxygen-fuel flame which is hotter.

6. Method of smelting and refining a charge according to any one of Claims 1 to 4, characterized in that the flames (15,15′) subjected to pulsed combustion are angularly inclined (B) towards the surface of the molten charge during refining.

7. Method of smelting and refining a charge according to any one of Claims 1 to 6, characterized in that the flames (15,15′) subjected to pulsed combustion are angularly inclined (A) upstream with respect to the direction of movement of the charge during smelting and refining.

8. Method of smelting and refining a charge according to any one of Claims 1 to 6, characterized in that the flames (15,15′) subjected to pulsed combustion are of the type with precombustion inside the burner (11,12).

9. Method of smelting and refining a charge according to any one of Claims 1 to 7, characterized in that a flame (15,15′) subjected to pulsed combustion may be advanced to a greater or lesser degree in the furnace (1) along its axis.
